# EUROPÄISCHE PATENTSCHRIFT

(11) **EP 2 655 987 B1**
(45) Veröffentlichungstag und Bekanntmachung des Hinweises auf die Patenterteilung: **16.03.2016**
(21) Anmeldenummer: 11804682.0
(22) Anmeldetag: 21.12.2011
(51) Int. Cl.: F24J 2/46, F24J 2/50, F24J 2/52

(54) **KOLLEKTORGEHÄUSE**
COLLECTOR HOUSING
BOÎTIER DE COLLECTEUR

(30) Priorität: 24.12.2010 DE 202010017055 U
(43) Veröffentlichungstag der Anmeldung: 30.10.2013
(73) Patentinhaber: Robert Bosch GmbH, 70442 Stuttgart (DE)
(72) Erfinder: BOEDEKER, Hendrik, 99084 Erfurt (DE); CLEMENT, Uwe, 73114 Schlat (DE); WEISS, Martin, 71292 Friolzheim (DE); WEIL, Thomas, 71665 Vaihingen (DE)
(86) Internationale Anmeldenummer: PCT/EP2011/073628
(87) Internationale Veröffentlichungsnummer: WO 2012/085109

(56) Entgegenhaltungen:
- WO-A2-2011/009754
- JP-A- 2010 107 118
- US-A- 4 172 311
- US-A1- 2010 006 090

## Beschreibung

Die Erfindung betrifft ein Kollektorgehäuse zur Aufnahme eines Solarabsorbers gemäß dem Oberbegriff des Patentanspruches 1.

Im Stand der Technik sind verschiedene Kollektorgehäuse mit einem Kollektorrahmen und einem darauf angeordneten Kollektorglas bekannt. Üblicherweise wird das Kollektorglas mit einem Kleber, meistens einem Silikonwerkstoff, an dem Kollektorrahmen befestigt. Dazu wird der Kleber zunächst auf den Kollektorrahmen aufgetragen und anschließend das Kollektorglas darauf aufgesetzt. Danach muss der Kleber aushärten. In einem weiteren Arbeitsschritt wird überschüssige Klebemasse mit einem Spachtel und Lösungsmittel beseitigt. Dies ist sehr zeitaufwendig und erhöht daher die Herstellkosten. Bleibt das Klebematerial zurück, entsteht zudem ein unästhetischer Eindruck.

Die US 4172311 A offenbart ein Kollektorgehäuse zur Aufnahme eines Solarabsorbers mit einem Kollektorrahmen und einer Abdeckeinrichtung, wobei die Abdeckeinrichtung aus einer Glasscheibe besteht.

Aufgabe der Erfindung ist es, diese und weitere Nachteile des Standes der Technik zu überwinden, und ein Kollektorgehäuse zur Verfügung zu stellen, dass in wenigen Schritten einfach herzustellen ist, wobei insbesondere die Verbindung zwischen Kollektorrahmen und Kollektorglas derart gestaltet sein soll, dass eine schnelle Montage gewährleistet wird.

Hauptmerkmale der Erfindung sind im kennzeichnenden Teil von Anspruch 1 angegeben und weitere Ausgestaltungen sind den Unteransprüchen zu entnehmen.

Bei einem Kollektorgehäuse zur Aufnahme eines Solarabsorbers mit einem Kollektorrahmen und einer Abdeckeinrichtung, sieht die Erfindung vor, dass die Abdeckeinrichtung aus einer Glasscheibe und einem daran angeschäumten Profilkörper besteht, der über Halteklammern mit dem Kollektorrahmen verbunden ist.

Durch die erfindungsgemäß vorgesehene Abdeckeinrichtung, die eine Glasscheibe und einen daran angeschäumten Profilkörper aufweist, können bei der Fertigung des Kollektorgehäuses der im Stand der Technik vorgesehene Klebeschritt und die damit verbundenen Folgeschritte, wie insbesondere das Entfernen überschüssiger Klebemasse sowie Aushärtezeiten, vermieden werden. Stattdessen wird der Profilkörper bei der Herstellung direkt an die Glasscheibe angeschäumt und ist dadurch mit dieser verbunden. Dies ist fertigungstechnisch erheblich einfacher und spart daher Zeit und Kosten bei der Herstellung eines Kollektorgehäuses.

Zur Verbindung einer solchen Abdeckeinrichtung mit dem Kollektorrahmen sind Halteklammern vorgesehen. Diese können ebenfalls sehr leicht gefertigt werden. Beispielsweise werden diese aus Blechen gestanzt und anschließend gebogen. Diese Stanzteile können somit als Massenware kostengünstig zur Verfügung gestellt werden. Das erfindungsgemäße Kollektorgehäuse ist daher insgesamt einfach aufgebaut und unkompliziert und kostengünstig zu fertigen.

Die vorgesehenen Halteklammern ermöglichen außerdem, dass die Verbindung zwischen dem Kollektorrahmen und der Abdeckeinrichtung bei Bedarf, beispielsweise zu Wartungszwecken oder beim Recycling des Kollektors, durch Lösen der Klammern zerstörungsfrei gelöst werden kann. Hierzu kann gegebenenfalls der Einsatz eines speziell angefertigten Werkzeugs hilfreich sein, ein einfacher Spachtel kann aber auch genügen.

Eine wichtige Ausführungsform der Erfindung sieht vor, dass die Halteklammern auf einem Profilrücken des Kollektorrahmens angeordnet sind. Dies ist besonders vorteilhaft da es ermöglicht, dass die Halteklammern bei der Fertigung des Kollektorgehäuses auf dem Profilrücken z.B. durch Aufstecken vormontiert werden können. Zur Verbindung der Abdeckeinrichtung mit dem Kollektorrahmen muss die Abdeckeinrichtung schließlich lediglich auf das vorgefertigte Bauteil, bestehend aus dem Kollektorrahmen und der bzw. den damit verbundenen Halteklammern, aufgesetzt werden. Zur weiteren Erleichterung der Montage kann es hierbei gegebenenfalls von Vorteil sein, die Halteklammern auf dem Profilrücken durch ein geeignetes Befestigungsmittel, wie beispielsweise ein Rastmittel oder ähnliches, zu fixieren.

Anstelle der beschriebenen Ausführungsform ist es jedoch ebenfalls möglich, dass die Halteklammern zunächst an den Profilkörper vormontiert und schließlich beim Aufsetzen des Profilkörpers auf den Kollektorrahmen mit diesem verbunden werden.

Eine weitere Ausgestaltung der Erfindung sieht vor, dass der Profilrücken von einer Kunststoffumspritzung zumindest teilweise umschlossen ist. Der Kollektorrahmen bzw. der Profilrücken ist bevorzugt aus einem Metall, wie zum Beispiel Aluminium, gefertigt und daher mit verhältnismäßig hohen Materialkosten verbunden. Durch die Verwendung einer Kunststoffumspritzung können die Materialkosten eines erfindungsgemäßen Kollektorgehäuses gesenkt werden. Vorteilhaft ist außerdem, dass Kunststoffspritzteile mit besonders geringem Zeit- und Kostenaufwand in unterschiedlichen Formen herstellbar sind. Hinzu kommt, dass sich die Verwendung eines Kunststoffteils positiv auf das Gewicht des Kollektorrahmens auswirkt.

Eine wichtige Weiterbildung der Erfindung sieht vor, dass der Profilrücken und der Profilkörper jeweils kraftschlüssig mit den Halteklammern verbunden sind. Eine kraftschlüssige Verbindung kann gegebenenfalls durch ein geeignetes Werkzeug gelöst werden. Dies ermöglicht, dass das Kollektorgehäuse zur Wartung oder beim Recycling mit wenigen Handgriffen und ohne große Krafteinwirkung geöffnet werden kann.

Davon ausgehend sieht eine zusätzliche Ausgestaltung der Erfindung vor, dass der Profilkörper eine Dichtlippe und eine Rippe aufweist, die an den Halteklammern anliegen. Auf diese Weise können die an der Verbindungsstelle auftretenden Kräfte auf zwei Teile des Profilkörpers, nämlich die Dichtlippe und die Rippe verteilt werden. Dies reduziert die Materialbelastung und trägt daher dazu bei, dass ein besonders langlebiges Kollektorgehäuse bereitgestellt werden kann.

In einer besonders wichtigen Ausführungsform der Erfindung sind die Halteklammern im Wesentlichen U-förmig ausgebildet. Ein solches Bauteil kann leicht aus einem Stanzbauteil bereitgestellt werden und bietet an der Innen- und Außenseite der beiden U-Schenkel zudem genügend Platz für eine kraftschlüssige Verbindung mit dem Profilrücken bzw. dem Profilkörper.

Es ist ferner bevorzugt, dass an einer Außenseite der Halteklammern äußere Spannmittel vorgesehen sind, die an dem Profilkörper anliegen, und dass an einer Innenseite der Halteklammern innere Spannmittel vorgesehen sind, die an dem Profilrücken anliegen. Auf diese Weise wird es ermöglicht, dass der Profilrücken und der Profilkörper in jeweils genau entgegengesetzter Richtung Kraft auf die Halteklammer ausüben. Auf diese Weise kann eine besonders stabile kraftschlüssige Verbindung zwischen der Halteklammer und dem Profilrücken bzw. dem Profilkörper sichergestellt werden. Bei der Verbindung der Abdeckeinrichtung mit dem Kollektorrahmen rasten beide Spannmittel ein.

Zur weiteren Stabilisierung der kraftschlüssigen Verbindung zwischen dem Profilkörper und der Halteklammer und zur Abdichtung des Gehäuseinneren gegenüber Nässe und sonstigen Witterungseinflüssen sieht eine weitere Ausführungsform eines erfindungsgemäßen Kollektorgehäuses vor, dass die Dichtlippe in eine Aufnahmenut des Kollektorrahmens eingreift. Davon ausgehend beinhaltet eine andere Weiterbildung, dass die Aufnahmenut die Dichtlippe zumindest abschnittsweise mit einer Kraft in Richtung der Halteklammern beaufschlagt. Diese Ausgestaltung verstärkt den Kraftschluss zwischen dem Profilkörper und der Halteklammer und sorgt daher für eine besonders stabile Verbindung.

Darüber hinaus ist es bei der Ausgestaltung eines erfindungsgemäßen Kollektorgehäuses zudem vorteilhaft, wenn mehrere Halteklammern gleichmäßig, vorzugsweise symmetrisch, über den Profilrücken verteilt sind. Durch die gleichmäßige Verteilung der Halteklammern werden Schwachstellen bei der Verbindung zwischen dem Kollektorrahmen und der Abdeckeinrichtung weitgehend vermieden. Auf diese Weise kann auch bei unsymmetrischer äußerer Krafteinwirkung, zum Beispiel bei der Montage oder beim Transportieren des Kollektorgehäuses, ein stabiler Halt zwischen dem Kollektorrahmen und der Abdeckeinrichtung gewährleistet werden.

Eine weitere wichtige Ausgestaltung der Erfindung sieht vor, dass der Profilrücken und/oder dessen Kunststoffumspritzung an einer Rastposition an einer Halteklammer ausgespart, oder um etwa die Hälfte der Materialdicke der Halteklammer dünner ausgebildet ist. Vorteilhaft hierbei ist insbesondere, dass die optimalen Positionen für die Halteklammern beim Zusammenfügen des Gehäuses visuell erkennbar sind. Dies erleichtert die Montage und hilft, Montagefehler zu vermeiden.

Weitere Merkmale, Einzelheiten und Vorteile der Erfindung ergeben sich aus dem Wortlaut der Ansprüche, sowie aus der folgenden Beschreibung von Ausführungsbeispielen anhand der Zeichnungen. Es zeigt:
- Fig. 1: ein Teil eines erfindungsgemäßen Kollektorgehäuses im Querschnitt und
- Fig. 2: eine Halteklammer eines erfindungsgemäßen Kollektorgehäuses.

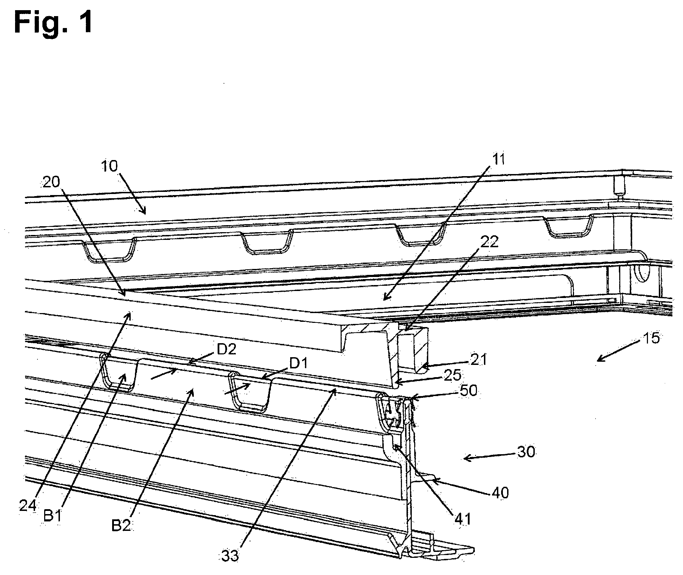

In Fig. 1 sind Teile eines erfindungsgemäßen Kollektorgehäuses zur Aufnahme eines Solarabsorbers im Querschnitt dargestellt. Man erkennt einen Kollektorrahmen 30 und eine Abdeckeinrichtung 10 des Kollektorgehäuses. Die Abdeckeinrichtung 10 ist über dem Kollektorrahmen 30 angeordnet. Diese Anordnung entspricht der, die die beiden Bauteile kurz vor dem Zusammenfügen einnehmen.

In der dargestellten Ausführungsform ist eine Halteklammer 50 gezeigt, die auf einem Profilrücken 33 des Kollektorrahmens 30 angeordnet ist. Der Profilrücken 33, der bevorzugt aus einem leichten Metall, wie beispielsweise Aluminium gebildet ist, weist in der Darstellung eine Kunststoffumspritzung 40 auf.

Am oberen Ende der Kunststoffumspritzung 40 sind in regelmäßigen Abständen unterschiedliche Bereiche B1 und B2 ausgebildet. Die Bereiche B1 weisen eine Dicke D1 auf, die geringer ist, als eine Dicke D2, der Bereiche B2. Die Bereiche B1 sind zur Aufnahme der Halteklammern 50 vorgesehen und kennzeichnen durch ihre Ausgestaltung optisch den vorgesehenen Anbringungsort der Halteklammern 50. Durch die reduzierte Dicke D1 im Bereich B1 wird zudem sichergestellt, dass die durch die Anlage am Profilrücken auftretenden Spannungen im Profilkörper möglichst homogen verteilt sind, denn die Dichtlippe 25 liegt an allen Stellen des Profilskörper 30 gleichmäßig an.

Die Kunststoffumspritzung 50 weist eine taschenartig ausgestülpte Ausformung auf, die eine Aufnahmenut 41 des Kollektorrahmens 30 bildet. Die Abdeckeinrichtung 10 besteht aus einer Glasscheibe 15 und einem daran angeschlossenen Profilkörper 20, wobei der Profilkörper 20 auf der dem Kollektorrahmen 30 abgewandten Seite über eine horizontale Stützfläche 22 mit der Platte 15 verbunden ist.

Auf der dem Kollektorrahmen zugewandten Seite weist der Profilkörper 20 eine vertikal verlaufende Dichtlippe 25 sowie eine vertikal verlaufende Rippe 21 auf. Dazu beabstandet ist außerdem eine ebenfalls vertikal verlaufende Tropfkante 24 vorgesehen. Der Profilkörper 20 und die Glasscheibe 15 bilden auf der dem Kollektorrahmen abgewandten Seite eine ebene Oberseite 11 der Abdeckeinrichtung 10.

Bei der Montage des erfindungsgemäßen Kollektorgehäuses wird die Abdeckeinrichtung 10 auf dem Kollektorrahmen 30 aufgesteckt. Dabei werden der Profilrücken 33 und der Profilkörper 20 jeweils kraftschlüssig mit den Halteklammern 50 verbunden. In der dargestellten Ausführungsform erfolgt der kraftschlüssige Verbund zwischen dem Profilkörper 20 und der Halteklammer 50 über die Dichtlippe 25 und die Rippe 21, die jeweils an einer Außenseite 55 der Halteklammer 50 anliegen.

Die Halteklammer 50 ist in der dargestellten Ausführungsform im Wesentlichen U-förmig ausgebildet. In einem fertig montierten Zustand des Kollektorgehäuses greift die Dichtlippe 25 in die Aufnahmenut 41 des Kollektorrahmens ein. Dabei beaufschlagt die Aufnahmenut 41 die Dichtlippe 25 abschnittsweise mit einer Kraft in Richtung der Halteklammer 50. Auf diese Weise kann eine besonders stabile Verbindung zwischen dem Profilkörper und der Halteklammer sichergestellt werden. Darüber hinaus bieten die Dichtlippe 25 und die taschenförmige Ausformung, die die Aufnahmenut 41 bildet, eine Möglichkeit um den Innenraum des Kollektorgehäuses vor Nässe und Witterungseinflüssen zu schützen.

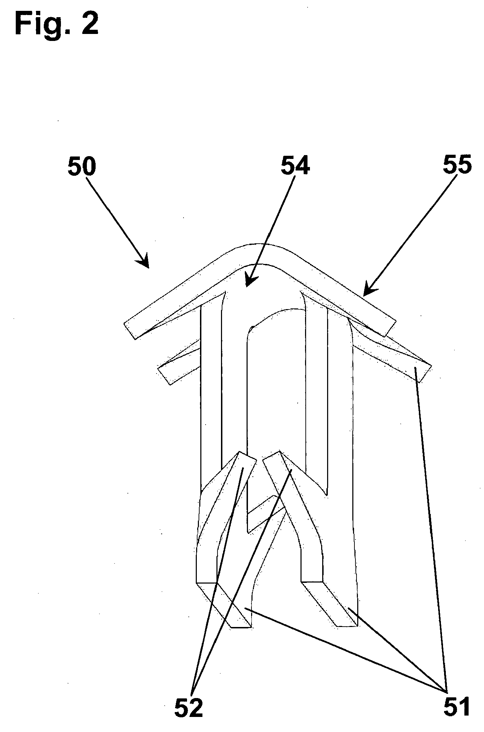

In Fig. 2 ist eine Detailansicht einer Halteklammer 50 eines erfindungsgemäßen Kollektorgehäuses dargestellt. Die Halteklammer 50 ist im Wesentlichen U-förmig ausgebildet. An einer Außenseite 55 der Halteklammer 50 sind in der dargestellten Ausführungsform insgesamt acht äußere Spannmittel 51 vorgesehen, von denen jeweils vier an einem Schenkel ausgebildet sind. Von diesen vier äußeren Spannmitteln 51 pro U-Schenkel, sind jeweils drei am Schenkelende ausgebildet und ein äußeres Spannmittel 51 ist im oberen Bereich des U-Schenkels ausgebildet.

An einer Innenseite 54 der Halteklammer 50 sind insgesamt vier innere Spannmittel 52 vorgesehen, von denen jeweils zwei an je einem Schenkel der U-förmigen Halteklammern 50 ausgebildet sind. Bei der dargestellten Ausführung der Halteklammer 50 ist vorgesehen, dass die inneren Spannmittel 52 im fertig montierten Zustand des erfindungsgemäßen Kollektorgehäuses an einem Profilrücken eines Kollektorrahmens anliegen.

Die inneren und äußeren Spannmittel 51, 52 sind jeweils zackenförmig ausgebildet. Je nach Material des Profilkörpers, bzw. des Profilrückens, können die zackenförmigen Spitzen der Spannmittel 51, 52 in das Material des Profilrückens, bzw. des Profilkörpers, eingreifen und so die Verbindung zwischen der Halteklammer und den anliegenden Bauteilen weiter verstärken.

Man erkennt außerdem, dass die Schenkel der im Wesentlichen U-förmigen Halteklammer 50 leicht nach innen gebogen sind. Diese Ausgestaltung ermöglicht, dass die Halteklammer 50 beispielsweise mit einer Nut des Profilrückens in Eingriff gebracht werden kann. Denkbar ist aber auch, dass die gebogenen Schenkel eine Hinterschneidung an einem Profilrücken hintergreifen und so ebenfalls zur kraftschlüssigen Verbindung zwischen dem Profilrücken und der Halteklammer beitragen.

Die Erfindung ist nicht auf eine der vorstehend beschriebenen Ausführungsformen beschränkt, sondern in vielfältiger Weise abwandelbar.

**BEZUGSZEICHEN**

| | | | |
|---|---|---|---|
| 10 | Abdeckeinrichtung | 40 | Kunststoffumspritzung |
| 11 | Oberseite | 41 | Aufnahmenut |
| | | | |
| 15 | Glasscheibe | 50 | Halteklammern |
| | | 51 | äußeres Spannmittel |
| 20 | Profilkörper | 52 | inneres Spannmittel |
| 21 | Rippe | | |
| 22 | Stützfläche | 54 | Innenseite |
| | | 55 | Außenseite |
| 24 | Tropfkante | | |
| 25 | Dichtlippe | B1 | Bereich |
| | | B2 | Bereich |
| 30 | Kollektorrahmen | D1 | Dicke |
| 33 | Profilrücken | D2 | Dicke |

## Patentansprüche

1. Kollektorgehäuse zur Aufnahme eines Solarabsorbers mit einem Kollektorrahmen (30) und einer Abdeckeinrichtung (10), wobei die Abdeckeinrichtung (10) aus einer Glasscheibe (15) besteht,
**dadurch gekennzeichnet, dass** an die Glasscheibe (15) ein Profilkörper (20) angeschäumt ist und der Profilkörper (20) über Halteklammern (50) mit dem Kollektorrahmen (30) verbunden ist.

2. Kollektorgehäuse nach Anspruch 1,
**dadurch gekennzeichnet, dass** die Halteklammern (50) auf einem Profilrücken (33) des Kollektorrahmens (30) angeordnet sind.

3. Kollektorgehäuse nach Anspruch 2,
**dadurch gekennzeichnet, dass** der Profilrücken (33) von einer Kunststoffumspritzung (40) zumindest teilweise umschlossen ist.

4. Kollektorgehäuse nach Anspruch 2 oder 3,
**dadurch gekennzeichnet, dass** der Profilrücken (33) und der Profilkörper (20), jeweils kraftschlüssig mit den Halteklammern (50) verbunden sind.

5. Kollektorgehäuse nach Annspruch 4,
**dadurch gekennzeichnet, dass** der Profilkörper (20) eine Dichtlippe (25) und eine Rippe (21) aufweist, die an den Halteklammern (50) anliegen.

6. Kollektorgehäuse nach einem der Ansprüche 2 bis 5,
**dadurch gekennzeichnet, dass** die Halteklammern (50) im Wesentlichen U-förmig ausgebildet sind.

7. Kollektorgehäuse nach einem der Ansprüche 5 oder 6,
**dadurch gekennzeichnet, dass** an einer Außenseite (55) der Halteklammern (50) äußere Spannmittel (51) vorgesehen sind, die an dem Profilkörper (20) anliegen, und dass an einer Innenseite (54) der Halteklammern (50) innere Spannmittel (52) vorgesehen sind, die an dem Profilrücken (33) anliegen.

8. Kollektorgehäuse nach einem der Ansprüche 5 bis 7,
**dadurch gekennzeichnet, dass** die Dichtlippe (25) in eine Aufnahmenut (41) des Kollektorrahmens (30) eingreift.

9. Kollektorgehäuse nach Anspruch 8,
**dadurch gekennzeichnet, dass** die Aufnahmenut (41) die Dichtlippe (25) zumindest abschnittsweise mit einer Kraft in Richtung der Halteklammern (50) beaufschlagt.

10. Kollektorgehäuse nach einem der vorhergehenden Ansprüche,
**dadurch gekennzeichnet, dass** der Profilkörper (20) auf der dem Kollektorrahmen (30) abgewandten Seite über wenigstens eine horizontale Stützfläche (22) mit der Glasscheibe (15) verbunden ist.

11. Kollektorgehäuse nach einem der Ansprüche 2 bis 10,
**dadurch gekennzeichnet, dass** mehrere Halteklammern (50) gleichmäßig, vorzugsweise symmetrisch über den Profilrücken (33) verteilt angeordnet sind.

12. Kollektorgehäuse nach einem der Ansprüche 2 bis 11,
**dadurch gekennzeichnet, dass** der Profilrücken (33) und/oder dessen Kunststoffumspritzung an einer Rastposition einer Halteklammer (50) ausgespart und oder um etwa die Materialdicke der Halteklammer (50) dünner ausgebildet ist.

## Claims

1. Collector housing for accommodating a solar absorber, having a collector frame (30) and a covering device (10), wherein the covering device (10) comprises a glass panel (15), **characterized in that** a profile body (20) is applied to the glass panel (15) by foaming, and the profile body (20) is connected to the collector frame (30) via retaining clips (50).

2. Collector housing according to Claim 1, **characterized in that** the retaining clips (50) are arranged on a profile spine (33) of the collector frame (30).

3. Collector housing according to Claim 2, **characterized in that** the profile spine (33) is enclosed, at least in part, by a plastics injection-moulded encapsulation (40).

4. Collector housing according to Claim 2 or 3, **characterized in that** the profile spine (33) and the profile body (20) are connected to the retaining clips (50) in a force-fitting manner in each case.

5. Collector housing according to Claim 4, **characterized in that** the profile body (20) has a sealing lip (25) and a rib (21), which butt against the retaining clips (50).

6. Collector housing according to one of Claims 2 to 5,
**characterized in that** the retaining clips (50) are of essentially U-shaped design.

7. Collector housing according to either of Claims 5 and 6,
**characterized in that** outer clamping means (51) are provided on an outer side (55) of the retaining clips (50), and butt against the profile body (20), and **in that** inner clamping means (52) are provided on an inner side (54) of the retaining clips (50), and butt against the profile spine (33).

8. Collector housing according to one of Claims 5 to 7,
**characterized in that** the sealing lip (25) engages in an accommodating groove (41) of the collector frame (30).

9. Collector housing according to Claim 8,
**characterized in that** the accommodating groove (41) forces the sealing lip (25), at least in part, in the direction of the retaining clips (50).

10. Collector housing according to one of the preceding claims,
**characterized in that** the profile body (20), on the side directed away from the collector frame (30), is connected to the glass panel (15) via at least one horizontal supporting surface (22).

11. Collector housing according to one of Claims 2 to 10,
**characterized in that** a plurality of retaining clips (50) are distributed uniformly, preferably symmetrically, over the profile spine (33).

12. Collector housing according to one of Claims 2 to 11,
**characterized in that** the profile spine (33) and/or the plastics injection-moulded encapsulation thereof have/has material removed therefrom, and/or are/is designed to be thinner by approximately the material thickness of the retaining clip (50), at a latching position of a retaining clip (50).

## Revendications

1. Boîtier de collecteur destiné à recevoir un absorbeur solaire comprenant un cadre de collecteur (30) et un dispositif de recouvrement (10), le dispositif de recouvrement (10) se composant d'une vitre en verre (15),
**caractérisé en ce qu'**un corps profilé (20) est appliqué par moussage sur la vitre en verre (15) et le corps profilé (20) est connecté par le biais de pinces de fixation (50) au cadre de collecteur (30).

2. Boîtier de collecteur selon la revendication 1,
**caractérisé en ce que** les pinces de fixation (50) sont disposées sur un dos profilé (33) du cadre de collecteur (30).

3. Boîtier de collecteur selon la revendication 2,
**caractérisé en ce que** le dos profilé (33) est au moins en partie entouré par un surmoulage en plastique (40).

4. Boîtier de collecteur selon la revendication 2 ou 3,
**caractérisé en ce que** le dos profilé (33) et le corps profilé (20) sont chacun connectés par engagement par force aux pinces de fixation (50).

5. Boîtier de collecteur selon la revendication 4,
**caractérisé en ce que** le corps profilé (20) présente une lèvre d'étanchéité (25) et une nervure (21), lesquelles s'appliquent contre les pinces de fixation (50).

6. Boîtier de collecteur selon l'une quelconque des revendications 2 à 5,
**caractérisé en ce que** les pinces de fixation (50) sont réalisées essentiellement en forme de U.

7. Boîtier de collecteur selon l'une quelconque des revendications 5 et 6,
**caractérisé en ce que** des moyens de serrage extérieurs (51) sont prévus au niveau d'un côté extérieur (55) des pinces de fixation (50), lesquels s'appliquent contre le corps profilé (20), et **en ce que** des moyens de serrage intérieurs (52) sont prévus au niveau d'un côté intérieur (54) des pinces de fixation (50), lesquels s'appliquent contre le dos profilé (33).

8. Boîtier de collecteur selon l'une quelconque des revendications 5 à 7,
**caractérisé en ce que** la lèvre d'étanchéité (25) vient en prise dans une rainure de réception (41) du cadre de collecteur (30).

9. Boîtier de collecteur selon la revendication 8,
**caractérisé en ce que** la rainure de réception (41) sollicite la lèvre d'étanchéité (25) au moins en partie avec une force dans la direction des pinces de fixation (50).

10. Boîtier de collecteur selon l'une quelconque des revendications précédentes, **caractérisé en ce que** le corps profilé (20) est connecté à la vitre en verre (15) sur le côté opposé au cadre de collecteur (30) par le biais d'au moins une surface de support horizontale (22).

11. Boîtier de collecteur selon l'une quelconque des revendications 2 à 10,
**caractérisé en ce que** plusieurs pinces de fixation (50) sont disposées de manière répartie uniformément, de préférence symétriquement sur le dos profilé (33) .

12. Boîtier de collecteur selon l'une quelconque des revendications 2 à 11,
**caractérisé en ce que** le dos profilé (33) et/ou son surmoulage en plastique sont évidés au niveau d'une position d'encliquetage d'une pince de fixation (50) et/ou sont réalisés sous forme plus mince d'environ l'épaisseur de matériau de la pince de fixation (50).
